# EUROPÄISCHE PATENTSCHRIFT

(11) **EP 0 502 517 B1**
(45) Veröffentlichungstag und Bekanntmachung des Hinweises auf die Patenterteilung: **07.06.1995**
(21) Anmeldenummer: 92103762.8
(22) Anmeldetag: 04.03.1992
(51) Int. Cl.: G01F 1/32

(54) **Vorrichtung zur Messung des Fluidfusses in einem Strömungskanal**
Device for measuring fluid flow in a flow channel
Dispositif pour la mesure du débit d'un fluide dans un canal d'écoulement

(30) Priorität: 04.03.1991 FR 9102704
(43) Veröffentlichungstag der Anmeldung: 09.09.1992
(73) Patentinhaber: IWKA Aktiengesellschaft, D-76135 Karlsruhe (DE)
(72) Erfinder: Herzog, Jean-Philippe, F-68230 Turckheim (FR)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 227 556
- WO-A-86/00698
- DE-A- 2 035 545
- DE-A- 3 506 916

## Beschreibung

Die Erfindung betrifft eine Vorrichtung zur Messung des Fluidflusses in einem Strömungskanal nach dem Oberbegriff des Anspruchs 1.

Derartige Vorrichtungen finden bei der Bestimmung der Strömungsgeschwindigkeit sowie des Fluidvolumens Verwendung. An dem in den Strömungskanal eingesetzten Sondenkörper lösen sich auf beiden Seiten abwechselnd karmansche Wirbel ab, wodurch der Sondenkörper in eine Schwingung versetzt wird, wie in der DE 35 06 916 A1 beschrieben ist. Das Maß der Wirbelbildung sowie die Schwingungsfrequenz hängen im wesentlichen von der geometrischen Form des Sondenkörpers und insbesondere der Durchflußmenge des Fluids ab. Gemäß der DE 35 06 916 A1 ist der Sondenkörper mit einem Fahne versehen, deren Bewegung von außen abgetastet und gezählt wird, woraus in einer Näherung auf die Durchflußmenge sowie die Strömungsgeschwindigkeit geschlossen werden kann. Dieses Verfahren ist jedoch sehr aufwendig und fehleranfällig.

Des weiteren ist es bekannt, induktive oder kapazitive Differenzdruckmesser bzw. Differenzdruckmesser mit Piezo-Widerständen oder auf Ultraschallbasis zu verwenden. Die Differenzdruckmesser sind stromab des Sondenkörpers in dem Strömungskanal angeordnet und erfassen die infolge der Wirbel auftretenden Druckschwankungen. Die Druckschwankungen werden in elektrische Signale umgesetzt und nach Verstärkung weiterverarbeitet. Bei einem derartigen Verfahren ist der erfaßbare Meßbereich sehr gering. Desweiteren ist ein relativ großer Sondenkörper notwendig, um Wirbel ausreichender Intensität für die Erfassung zu erzeugen. Es hat sich darüber hinaus gezeigt, daß die Differenzdruckmesser gegen elektromagnetische Störeinflüsse empfindlich sind, wodurch das Meßergebnis verfälscht wird.

Gemäß der EP 0 227 556 A1 ist deshalb versucht worden, die Druckdifferenzen infolge der Wirbel mittels einer optischen Meßfaser zu erfaßen. Der in den Strömungskanal symmetrisch zu dessen Längsmittelachse eingesetzte Sondenkörper weist einen trapezförmigen Querschnitt auf, wobei in dem Sondenkörper ein im wesentlichen senkrecht zur Strömungsrichtung verlaufender Meßkanal ausgebildet ist. In dem Meßkanal ist eine Trennvorrichtung eingesetzt, die aus zwei Verschlußelementen sowie einer zwischen den Verschlußelementen gespannten Membran besteht. Mittels der Trennvorrichtung sind innerhalb des Meßkanals zwei voneinander unabhängige Druckkammern gebildet, die jeweils über einen Verbindungskanal mit der Fluidströmung in Verbindung stehen. An den Verschlußelementen sowie der Membran ist eine optische Meßfaser befestigt. Mittels einer Lichtquelle wird die optische Meßfaser mit einem Strahlenbündel beaufschlagt. Das Licht durchläuft die Meßfaser und tritt an deren entgegengesetzten Ende aus dieser aus. Das austretende Licht wird mittels eines Fotodetektors erfaßt und ausgewertet. In Abhängigkeit von den in dem Fluid auftretenden Wirbeln wird die Meßfaser zusammen mit der Membran ausgelängt, wodurch sich die von dem Fotodetektor erfaßte Lichtverteilung ändert, so daß die Druckänderung relativ zuverlässig erfaßbar ist. Darüber hinaus sind elektromagnetische Störeinflüsse unbeachtlich.

Mit einer derartigen Vorrichtung ist jedoch der Nachteil verbunden, daß die Aufbringung der optischen Meßfaser auf die Membran sowie die Verschlußelemente relativ aufwendig und somit zeit- und kostenintensiv ist. Darüber hinaus ist die Masse der Membran, die ebenfalls ausgelängt werden muß, relativ groß, wodurch die Genauigkeit der Meßergebnisse nachteilig beeinflußt ist.

Die WO 86/00698 zeigt einen Durchflußmesser zum Messen der Geschwindigkeit eines Fluids mit einem sich quer durch ein das Fluid führenden Rohr erstreckenden Lichtleiter.

Die Geschwindigkeit wird durch Schwingungen des Lichtleiters, die durch die Strömung ausgeübt werden, bestimmt.

Zum Schutz des Lichtleiters kann dieser gegebenenfalls innerhalb eines geeigneten Sondenkörpers hinreichender Flexibilität angeordnet sein. Durch die Strömung wird damit der Sondenkörper und indirekt mit diesem der Lichtleiter in Schwingungen versetzt.

Der Erfindung liegt die Aufgabe zugrunde, eine Vorrichtung der genannten Art zu schaffen, die bei konstruktiv einfachem Aufbau eine hohe Meßempfindlichkeit aufweist und gegen äußere Störeinflüsse unempfindlich ist.

Diese Aufgabe wird bei einer gattungsgemäßen Vorrichtung erfindungsgemäß durch die kennzeichnenden Merkmale des Anspruchs 1 gelöst.

Mittels der Referenzfaser können somit die nicht auf die Wirbel zurückgehenden Schwingungen erfaßt und berücksichtigt werden. Auf diese Weise lassen sich die Wirbelschwingungen mit hoher Genauigkeit erfassen, so daß zuverlässig auf die Fluid-Durchflußmenge geschlossen werden kann. Da die Referenzfaser praktisch den Ausgangszustand für die Wirbelschwingungsmessung definiert, sollte sie im wesentlichen den gleichen Lagerungs- und Anordnungsbedingungen wie die Meßfaser unterliegen. Es ist deshalb vorgesehen, daß die Referenzfaser sich ebenfalls frei durch den Referenzkanal erstreckt. Darüber hinaus verläuft der Referenzkanal im wesentlichen parallel zu dem Meßkanal, so daß grundsätzliche Messungsabweichungen gering gehalten werden können.

Die in Schwingung zu versetzende Masse der Meßfaser ist weiterhin relativ gering, so daß die Meßfaser bereits auf geringe Druckschwankungen reagiert, wodurch eine hohe Meßempfindlichkeit erreicht werden kann. Durch den umgebenden Sondenkörper ist die Meßfaser dabei von der direkten mechanischen Einwirkung des Fluids weitestgehend geschützt, so daß eine hohe Standzeit gegeben ist. Die Vorrichtung benötigt einen nur geringen Bauraum und ist gegenüber elektrischen und elektromagnetischen Störeinflüssen unempfindlich.

Im Bedarfsfall kann die Meßfaser in einfacher Weise ausgetauscht werden, ohne den gesamten Sondenkörper ausbauen zu müssen. Es ist lediglich notwendig, eine neue Meßfaser von außen in den Meßkanal einzuführen.

Es hat sich gezeigt, daß bei der erfindungsgemäßen Vorrichtung in einem weiten Meßbereich eine im wesentlichen lineare Abhängigkeit zwischen der Schwingungsfrequenz und dem Fluiddurchfluß auftritt, so daß die Durchflußmenge mit relativ hoher Genauigkeit erfaßt werden kann.

Eine konstruktiv einfache Befestigung des Sondenkörpers ist gewährleistet, wenn dieser über zwei außenseitig des Strömungskanals angeordnete Flansche befestigt ist. Alternativ dazu kann auch ein außenseitig aufgebrachter Flanschring vorgesehen sein. Vorzugsweise weist jeder Flansch ein Durchgangsloch auf, das mit dem Meßkanal fluchtet. Auf diese Weise verläuft die optische Meßfaser durch die Durchgangslöcher und den Meßkanal und kann im Bedarfsfall in einfacher Weise ausgewechselt werden. Dabei ist es möglich, daß die Flansche die Meßfaser halten bzw. spannen, so daß im Inneren des Strömungskanals bzw. an dem Sondenkörper keine weiteren Haltevorrichtungen für die Meßfaser vorgesehen sein müssen.

Um ein Austreten von Fluid zuverlässig zu vermeiden, ist an jeder Durchdringungsstelle der optischen Faser durch die Strömungskanalwand bzw. die Flansche ein Abdichtungselement, vorzugsweise eine Gummidichtung, vorgesehen.

Da sich die Meßfaser im wesentlichen diametral durch den Strömungskanal, der vorzugsweise von einer Rohrleitung oder ähnlichem gebildet ist, erstreckt, ist in bevorzugter Ausgestaltung der Erfindung vorgesehen, daß der Sondenkörper sich über die gesamte Höhe des Strömungskanals erstreckt. Auf diese Weise ist der gesamte, innerhalb des Strömungskanals befindliche Bereich der Meßfaser von dem Sondenkörper umgeben und dadurch vor der direkten Einwirkung der Strömungsenergie des Fluids geschützt. Dabei ist vorzugsweise vorgesehen, daß auch der Meßkanal sich über die gesamte Höhe des Sondenkörpers erstreckt.

Eine sehr gleichmäßige Schwingungs- bzw. Wirbelbildung kann gewährleistet werden, wenn die Kanten des Sondenkörpers, an denen sich die Wirbel ablösen, im wesentlichen parallel zum Meßkanal verlaufen.

Vorzugsweise weist der Meßkanal in einem mittleren Bereich einen vergrößerten Durchmesser auf, so daß die Druckschwankungen zuverlässig von der Meßfaser erfaßt werden können.

Der Meßkanal kann mit verschiedenen Querschnittsformen ausgebildet sein. Es hat sich jedoch bewährt, daß der Meßkanal einen im wesentlichen kreisförmigen Querschnitt aufweist.

In bevorzugter Ausgestaltung der Erfindung ist vorgesehen, daß die Verbindungskanäle im wesentlichen senkrecht zur Strömungsrichtung und senkrecht zum Meßkanal und somit zur Meßfaser verlaufen. Auf diese Weise ist einerseits ein zuverlässiger Schutz der Meßfaser vor Direkteinwirkung der Strömungsenergie des Fluides gewährleistet und andererseits eine zuverlässige Erfassung der Druckschwankungen ermöglicht.

Grundsätzlich ist die Anzahl der Verbindungskanäle auf jeder Seite des Sondenkörpers nicht beschränkt. Es hat sich jedoch bewährt, daß auf jeder Seite des Sondenkörpers ein Verbindungskanal, d. h. insgesamt zwei Verbindungskanäle vorgesehen sind, die symmetrisch zur Längsmittelachse des Strömungskanals angeordnet sind. Die Verbindungskanäle können eine beliebige Querschnittsform aufweisen, wobei sich jedoch ein rechteckförmiger Querschnitt bewährt hat, insbesondere in Form eines langgestreckten Rechtecks, wobei die Längserstreckung in Richtung der Meßfaser verläuft, so daß ein großer Bereich der Meßfaser den Druckschwankungen ausgesetzt werden kann. Vorzugsweise entspricht die Form der Mündungsöffnung der Verbindungskanäle an der Oberfläche des Sondenkörpers der Querschnittsform der Verbindungskanäle.

In einer möglichen Ausgestaltungsform der Erfindung ist vorgesehen, daß der Sondenkörper einen trapezförmigen Querschnitt senkrecht zur Meßfasererstreckung aufweist. Die beiden parallelen Seitenflächen liegen dabei senkrecht zur Strömungsrichtung, wobei insgesamt eine symmetrische Lage zur Längsmittelachse des Strömungskanals vorgesehen ist. Aufgrund der im wesentlichen senkrecht zur Strömungsrichtung ausgerichteten, der Strömung zugewandten Anströmseite des Sondenkörpers, kann eine gute Wirbelbildung erreicht werden. Dabei hat es sich bewährt, daß die der Strömung abgewandte Rückseite des Sondenkörpers kleiner als die Anströmseite ist, wobei die Seitenflächen in Strömungsrichtung schräg aufeinander zu verlaufen. Die Verbindungskanäle sollten dabei vorzugsweise in den Seitenflächen münden, so daß die Meßfaser die Druckschwankungen zuverlässig erfassen kann, ohne jedoch der Gefahr einer Beschädigung infolge des strömenden bzw. anprallenden Fluids zu unterliegen.

In einer weiteren Ausgestaltung kann vorgesehen sein, daß der Sondenkörper einen rhombischen oder quadratischen Querschnitt senkrecht zur Meßfaser aufweist. Der Sondenkörper ist dabei derart angeordnet, daß zwei symmetrisch zur Längsmittelachse angeordnete, schräg verlaufende Anströmflächen sowie zwei entsprechend symmetrisch zur Längsmittelachse angeordnete, schräg verlaufende Rückflächen gebildet sind. Dies kann erreicht werden, wenn bei einem rhombischen Querschnitt eine der Hauptachsen des Rhombus in der Mittellängsachse zu liegen kommt. Bei einem quadratischen Querschnitt ist dies erreicht, wenn eine Diagonale des Quadrats auf der Längsmittelachse liegt. Bei dem quadratischen Querschnitt ist dabei gewährleistet, daß die Flächen jeweils unter 45° zur Strömungsrichtung geneigt sind. Die Verbindungskanäle können dabei jeweils entweder in den Rückflächen oder in den Anströmflächen münden.

Zur Erfassung der Druckschwankungen infolge der Wirbel wird ein von einer Lichtquelle ausgehendes Strahlenbündel der optischen Meßfaser zugeführt bzw. in diese eingeleitet. Durch innere Reflektion der Lichtstrahlen durchlaufen diese die Meßfaser und treten am entgegengesetzten Ende der Meßfaser aus dieser aus. Das austretende Licht wird von einem Fotodetektor erfaßt und in ein elektrisches Signal umgesetzt, das nach Durchlaufen eines Verstärkers und einer Frequenz-Meßvorrichtung einer Anzeigevorrichtung zugeführt wird. Wenn zusätzlich zu der Meßfaser eine Referenzfaser vorgesehen ist, wird das von der Lichtquelle abgegebene Strahlenbündel mittels eines Strahlenteilers oder in sonstiger Weise geteilt, so daß ein Teil des Lichtes durch die Referenzfaser und der verbleibende Teil des Lichtes durch die Meßfaser verläuft. Mittels eines weiteren Fotodetektors wird das aus der Referenzfaser austretende Licht erfaßt. Die beiden Lichtwerte der Fotodetektoren werden in einer Vergleichsvorrichtung mittels eines geeigneten Verfahrens, beispielsweise des Subtraktions- oder des Dekorrelationsverfahren, ver- bzw. abgeglichen, so daß ein Signal bezüglich der durch die Wirbel erzeugten Druckschwankungen erhalten wird, das in bekannter Weise weiterverarbeitet und angezeigt werden kann.

Weitere Einzelheiten und Merkmale der Erfindung sind aus der folgenden Beschreibung einiger Ausführungsbeispiele unter Bezugnahme auf die Zeichnung ersichtlich. Es zeigen:
- Figur 1: einen Längsschnitt durch einen Strömungskanal mit einer Vorrichtung zur Durchflußmessung
- Figur 2: einen Querschnitt durch die Vorrichtung gemäß Figur 1,
- Figur 3: einen Sondenkörper gemäß einem zweiten Beispiel in perspektivischer Darstellung,
- Figur 4: den Sondenkörper gemäß Figur 3 in einer Querschnittsdarstellung gemäß Figur 2,
- Figur 5: eine schematische Darstellung einer Ausgestaltung der erfindungsgemäßen Vorrichtung,
- Figur 6: einen Querschnitt durch einen Sondenkörper gemäß Figur 5 und
- Figur 7: eine alternative Ausführungsform eines Sondenkörpers im Querschnitt.

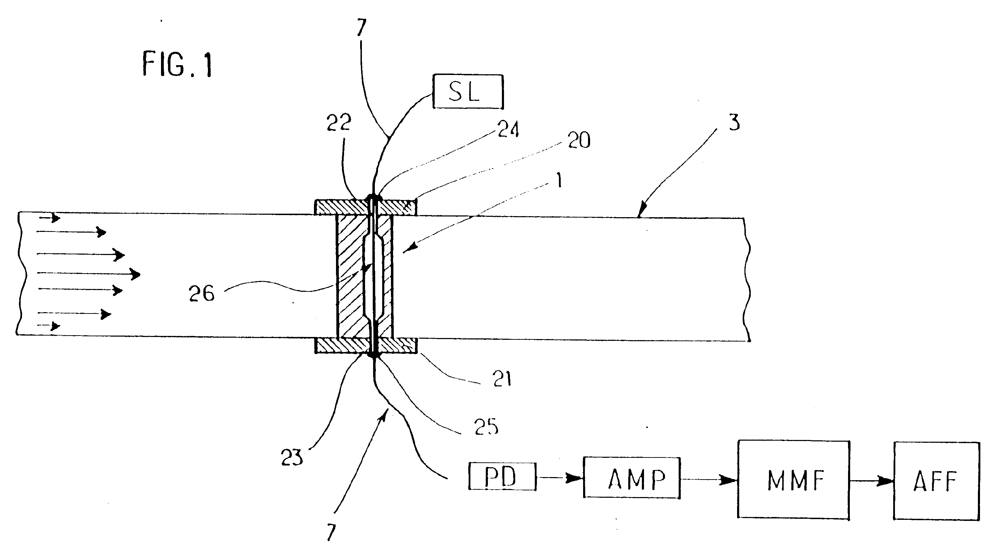

Die Figuren 1-4 zeigen keine erfindungsgemäßen Vorrichtungen, sondern dienen lediglich der Erläuterung des grundsätzlichen Meßprinzips und einiger abhängiger Ansprüche.

Ein in Figur 1 gezeigter Strömungskanal 3, der von einer Rohrleitung oder ähnlichem gebildet ist, ist von einem Fluid durchströmt, wie durch Pfeile angedeutet ist. Es kann sich dabei um eine Heizungsanlage, ein Gasverteilungsnetz, eine Dampf- oder Abgasleitung, eine Flüssigkeitsleitung oder sonstiges handeln. Innerhalb des Strömungskanals 3 ist ein Sondenkörper 1 angeordnet, der sich über die gesamte Höhe des Strömungskanals 3 erstreckt und im wesentlichen senkrecht zur Strömungsrichtung ausgerichtet ist. Auf der Außenseite des Strömungskanals 3 sind jeweils Flansche 20 und 21 ausgebildet, mittels derer der Sondenkörper 1 befestigt bzw. gehalten ist.

Innerhalb des Strömungskanals 3 ist ein im wesentlichen senkrecht zur Strömungsrichtung verlaufender Meßkanal 6 ausgebildet, der sich über die gesamte Höhe des Sondenkörpers 1 erstreckt und an seiner Ober- und Unterseite in ein in dem jeweiligen Flansch 20 bzw. 21 ausgebildetes Durchgangsloch 22 bzw. 23 übergeht. Auf diese Weise ist ein den Strömungskanal 3 vollständig durchdringender Kanal geschaffen, durch den eine optische Meßfaser 7 hindurchgeführt ist. Die Meßfaser 7 kann eine metallische Hülle aufweisen oder aus Polymeren hoher Temperatur bestehen. Darüber hinaus kann die Faser zur Verbesserung der Stabilität und des Schutzes vor Beschädigungen mit Kapillarmasselotte oder einem steifen Überzug versehen sein.

An der Durchdringungsstelle der Meßfaser 7 durch die Flansche 20 bzw. 21 ist jeweils ein Abdichtungselement 24, 25, beispielsweise eine Gummidichtung, vorgesehen, so daß die Meßfaser 7 den Strömungskanal fluiddicht durchdringt und ein Austreten von Fluid zuverlässig vermieden ist. Wie Figur 1 zu entnehmen ist, ist die Faser lediglich von den Dichtungen 24 bzw. 25 gehalten und erstreckt sich ansonsten frei durch den Meßkanal 6.

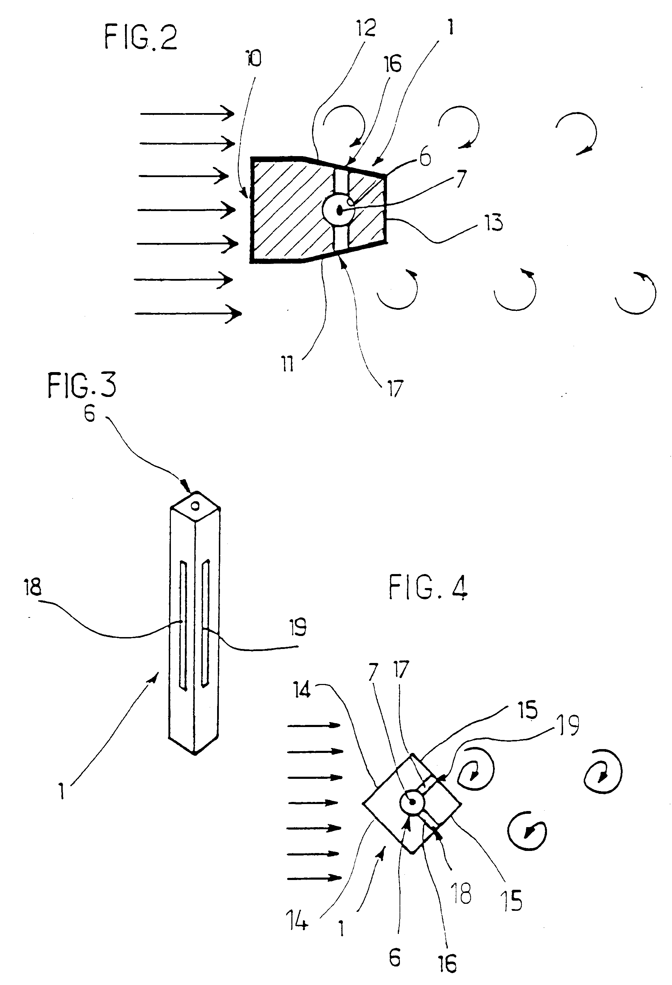

Der Querschnitt des Meßkanals 6 ist im wesentlichen kreisförmig (Figur 2), wobei er in einem mittleren Bereich 26 einen gegenüber seinem oberen bzw. unteren Bereich vergrößerten Querschnitt aufweist.

Der Sondenkörper 1 besitzt senkrecht zur Meßfaser in seinem stromauf angeordneten Bereich einen im wesentlichen rechteckigen Querschnittsbereich, an dem sich ein trapezförmiger Querschnittsbereich anschließt, wie Figur 2 zu entnehmen ist. Die Anströmseite 10 des Sondenkörpers 1, d. h. die der Strömung zugewandte Seite, erstreckt sich senkrecht zur Strömungsrichtung, wobei der Sondenkörper 1 symmetrisch zur Längsmittelachse des Strömungskanals 3 angeordnet ist. Die gemäß Figur 2 senkrecht zur Zeichenebene verlaufenden Kanten des Sondenkörpers 1 erstrecken sich somit senkrecht zur Strömungsrichtung.

Die der Strömung abgewandte Rückseite 13 des Sondenkörpers 1 verläuft ebenfalls senkrecht zur Strömungsrichtung und weist eine geringere Breite als die Anströmseite 10 auf, so daß die geneigten Seitenflächen 11 und 12 in Strömungsrichtung aufeinanderzulaufen.

In dem trapezförmigen Querschnittsbereich des Sondenkörpers 1 ist der Meßkanal 6 mit der Meßfaser 7 ausgebildet, wobei die Meßfaser 7 durch die Längsmittelachse des Strömungskanals 3 verläuft. Der Meßkanal 6 steht über zwei Verbindungskanäle 16 und 17 mit der Fluidströmung in Verbindung, die an diametral gegenüberliegenden Stellen in den Meßkanal 6 münden. Die Verbindungskanäle 16 und 17 verlaufen im wesentlichen senkrecht zur Strömungsrichtung und senkrecht zum Meßkanal 6, wobei sie symmetrisch zur Längsmittelachse des Strömungskanals 3 angeordnet sind. Die im wesentlichen gradlinigen Verbindungskanäle 16 und 17 münden an den geneigten Seitenflächen 11 und 12.

Das gemäß Figur 1 obere Ende der optischen Meßfaser 7 ist mit einer Lichtquelle SL verbunden. Die Lichtquelle SL, beispielsweise eine Laser-Diode, gibt ein Strahlenbündel von Lichtstrahlen kohärenten oder nicht-kohärenten Lichtern ab, das in die Meßfaser 7 eingeleitet wird. Durch innere Reflexion durchlaufen die Lichtstrahlen die Meßfaser 7 und treten am entgegengesetzten, gemäß Figur 1 unteren Ende aus der Meßfaser 7 aus. Das austretende Licht wird mittels eines Fotodetektors PD erfaßt, der ein entsprechendes elektrisches Signal abgibt, das anschließend mittels eines Verstärkers AMP verstärkt wird. Das Signal wird anschließend einer Frequenz-Meßvorrichtung MMS zugeführt, in der es beispielsweise mittels einer Fourier-Analyse ausgewertet wird, bevor es mittels einer Anzeigevorrichtung AFF zur Anzeige kommt.

Wenn die Fluidströmung auf den Sondenkörper 1 trifft, lösen sich an den Kanten in bekannter Weise alternierend karmansche Wirbel ab, wie in Figur 2 durch Wirbelpfeile angedeutet ist. Dadurch entstehen Druckschwankungen im Fluid, die über die Verbindungskanäle 16 und 17 auf die Meßfaser 7 übertragen werden, wodurch diese in Schwingung versetzt wird. Durch die Schwingung verändert sich das innere Reflexionsverhalten der Meßfaser, so daß es zu einer Veränderung der von dem Fotodetektor PD erfaßten Lichtintensitätsverteilung kommt. Daraus lassen sich Rückschlüsse auf die Schwingungsfrequenz und somit auf die Durchflußmenge ziehen.

In den Figuren 3 und 4 ist eine weitere Ausführungsform des Sondenkörpers 1 mit einem quadratischen Querschnitt senkrecht zum Meßkanal gezeigt. Der Meßkanal 6 ist im wesentlichen zentrisch bezüglich des quadratischen Querschnitts angeordnet und führt die frei gespannte Meßfaser 7. Wie Figur 4 zeigt, ist der Sondenkörper 1 derart im Strömungskanal angeordnet, daß eine Diagonale des quadratischen Querschnitts in Richtung der Längsmittelachse des Strömungskanals verläuft. Somit sind zwei unter 45° zur Strömungsrichtung geneigte, symmetrisch zur Längsmittelachse verlaufende Anströmflächen 14 sowie zwei ebenfalls unter 45° zur Strömungsrichtung geneigte, symmetrisch zur Längsmittelachse verlaufende Rückflächen 15 gebildet.

Die beiden Verbindungskanäle 16 und 17 erstrecken sich zwischen dem Meßkanal 6 und den Rückflächen 15 und weisen den Querschnitt eines langgestreckten Rechtecks auf, wobei die Längserstreckung in Richtung des Meßkanals 6 verläuft, wie Figur 3 zu entnehmen ist. Der Sondenkörper 1 gemäß den Figuren 3 und 4 wird entsprechend dem im Figur 1 gezeigten Ausführungsbeispiel eingebaut und betrieben, so daß hierauf nicht nochmals eingegangen wird.

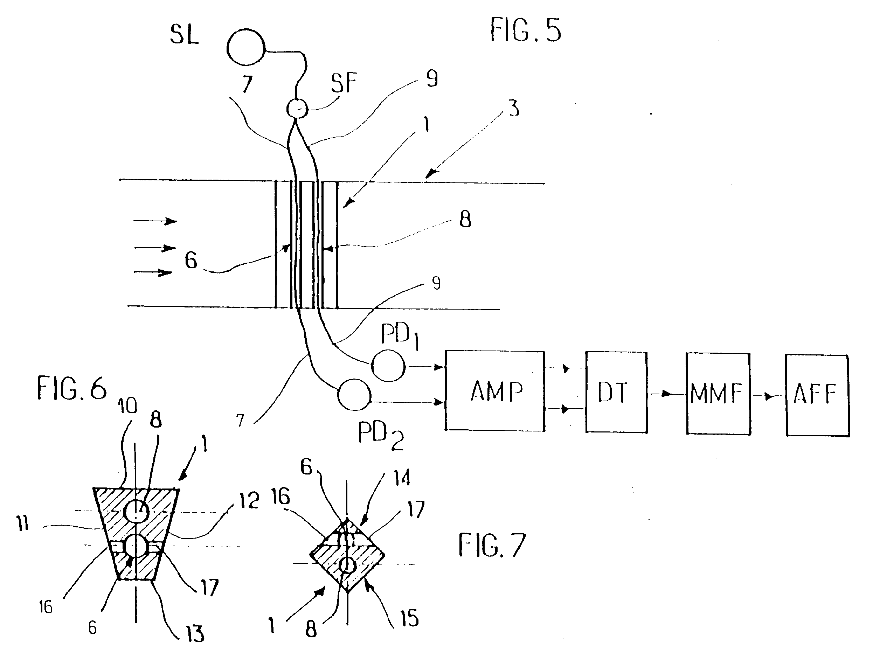

Die eigentliche Erfindung wird im Folgenden anhand der Figuren 5-7 erläutert.

Gemäß dem in den Figuren 5 und 6 dargestellten Ausführungsbeispiel weist der Sondenkörper einen trapezförmigen Querschnitt auf, indem der über Verbindungskanäle 16 und 17 mit dem Fluid in Verbindung stehende Meßkanal 7 ausgebildet ist. Die Anordnung und Ausrichtung des Sondenkörpers entspricht dabei der in Figur 1. Zusätzlich zu dem Meßkanal 6 ist in dem Sondenkörper 1 ein weiterer Referenzkanal 8 ausgebildet, dessen Abmessungen denen des Meßkanals 6 entsprechen und der parallel zu diesem verläuft. Der Referenzkanal 8 durchdringt den Sondenkörper vollständig und ist in nicht gezeigter Weise ebenfalls fluiddicht angeschlossen. Durch den Referenzkanal 8 ist eine Referenzfaser 9 entsprechend der Meßfaser 8 frei gespannt, wobei jedoch der Referenzkanal 8 nicht mit dem Fluid in Verbindung steht, so daß die Referenzfaser 9 nicht mit den aus der Wirbelbildung resultierenden Druckschwankungen beaufschlagt wird.

Wie Figur 6 zeigt, liegen der Meßkanal 6 und der Referenzkanal 8 in Strömungsrichtung hintereinander auf der Längsmittelachse des Strömungskanals 3 und erstrecken sich senkrecht zu dieser. Es ist jedoch auch möglich, daß der Referenzkanal 8 vor dem Meßkanal 6 liegt.

Zur Erfassung der Druckschwankungen bzw. der daraus resultierenden Schwingungen der Meßfaser 7 wird in zuvor beschriebener Weise Licht durch die Meßfaser 7 projiziert, das austretende Licht erfaßt und ausgewertet. Zusätzlich ist jedoch gemäß Figur 5 im Strahlengang vor der Meßfaser 7 bzw. hinter der Lichtquelle SL ein Strahlenteiler SF vorgesehen, mittels dessen ein Teil des Lichts, üblicherweise 50 %, aus dem Meßfaser-Strahlengang abgeteilt und der Referenzfaser 8 zugeführt wird. Das abgeteilte Licht durchläuft die Referenzfaser 8 infolge innerer Reflexion und tritt am gemäß Figur 5 unteren Ende aus dieser aus. Neben dem Fotodetektor PD1 für das aus der Meßfaser 7 austretende Licht ist ein weiterer Fotodetektor PD2 vorgesehen, der das aus der Referenzfaser 8 austretende Licht erfaßt. Die Fotodetektoren PD1 und PD2 geben jeweils ein Signal ab, das in einem Verstärker AMP verstärkt und anschließend einer Vergleichsvorrichtung DT zugeführt wird. In der Vergleichsvorrichtung DT werden die beiden Signale miteinander abgeglichen. Da die Referenzfaser 8 nicht den Druckschwankungen infolge der Wirbelbildung in dem Fluid unterliegt, kann sie allenfalls durch äußere Störschwingungen ausgelängt sein. Die Meßfaser 7 unterliegt in diesem Fall den Störschwingungen und zusätzlich den Schwingungen infolge der Druckschwankungen im Fluid. Durch Differenzbildung oder einen sonstigen Abgleich ist es somit möglich, aus den Meßwerten der Meßfaser die Störschwingungen herauszurechnen. Die weitere Auswertung und Anzeige der Meßwerte erfolgt in bereits dargestellter Weise.

In Figur 7 ist ein weiteres Ausführungsbeispiel für den Sondenkörper 1 gezeigt, wobei dieser einen rhombischen Querschnitt aufweist, dessen eine Hauptachse in Richtung der Längsmittelachse des Strömungskanals ausgerichtet ist. Der Referenzkanal 8 und der Meßkanal 6 sind in Strömungsrichtung hintereinander auf der Längsmittelachse angeordnet und erstrecken sich senkrecht zu dieser. Der Meßkanal 6 steht über die Verbindungskanäle 16 und 17 mit der Fluidströmung in Verbindung, während der Referenzkanal 8 keine Verbindung zu der Fluidströmung aufweist. Die Anordnung des Sondenkörpers erfolgt in der in Figur 5 gezeigten Weise.

## Patentansprüche

1. Vorrichtung zur Messung des Fluidflusses in einem Strömungskanal (3), mit
einem Sondenkörper (1), der in dem Strömungskanal (3) symmetrisch zu dessen Längsmittelachse angeordnet ist und zumindest zwei sich im wesentlichen senkrecht zur Strömungsrichtung erstreckende Kanten aufweist, wobei in dem Sondenkörper (1) ein im wesentlichen senkrecht zur Strömungsrichtung verlaufender Meßkanal (6) ausgebildet ist, der über Verbindungskanäle (16, 17) mit der Fluidströmung in Verbindung steht,
einer optischen Meßfaser (7), die in dem Meßkanal (6) angeordnet ist, und
einer Erfassungsvorrichtung, mittels der die von Druckschwankungen des Fluids infolge von Wirbeln hervorgerufenen Änderungen der physikalischen Eigenschaften der Meßfaser (7) erfaßbar sind,
wobei die Meßfaser (7) sich frei durch den Meßkanal (6) erstreckt, dadurch gekennzeichnet, daß in dem Sondenkörper (1) ein zusätzlicher, mit dem Fluid nicht in Verbindung stehender Referenzkanal (8) ausgebildet ist, in dem eine optische Referenzfaser (9) angeordnet ist.

2. Vorrichtung nach Anspruch 1, dadurch gekennzeichnet, daß der Sondenkörper (1) über zwei außenseitig des Strömungskanals (3) angeordnete Flansche (20, 21) befestigt ist.

3. Vorrichtung nach Anspruch 2, dadurch gekennzeichnet, daß jeder Flansch (20, 21) ein Durchgangsloch (22, 23) aufweist, das mit dem Meßkanal (6) fluchtet, wobei die optische Meßfaser (7) durch die Durchgangslöcher (22, 23) verläuft.

4. Vorrichtung nach Anspruch 3, dadurch gekennzeichnet, daß an der Durchdringungsstelle der optischen Meßfaser (7) durch die Flansche (20, 21) jeweils ein Abdichtungselement (22, 23) vorgesehen ist.

5. Vorrichtung nach einem der Ansprüche 1 bis 4, dadurch gekennzeichnet, daß der Sondenkörper (1) sich über die gesamte Höhe des Strömungskanals (3) erstreckt.

6. Vorrichtung nach einem der Ansprüche 1 bis 5, dadurch gekennzeichnet, daß die Kanten im wesentlichen parallel zum Meßkanal (6) verlaufen.

7. Vorrichtung nach einem der Ansprüche 1 bis 6, dadurch gekennzeichnet, daß der Meßkanal (6) einen mittleren Bereich (26) mit einem vergrößerten Durchmesser aufweist.

8. Vorrichtung nach einem der Ansprüche 1 bis 7, dadurch gekennzeichnet, daß der Meßkanal (6) über die gesamte Höhe des Sondenkörpers (1) verläuft.

9. Vorrichtung nach einem der Ansprüche 1 bis 8, dadurch gekennzeichnet, daß der Meßkanal (6) einen zylindrischen Querschnitt aufweist.

10. Vorrichtung nach einem der Ansprüche 1 bis 9, dadurch gekennzeichnet, daß die Verbindungskanäle (16, 17) im wesentlichen senkrecht zur Strömungsrichtung und senkrecht zum Meßkanal (6) verlaufen.

11. Vorrichtung nach einem der Ansprüche 1 bis 10, dadurch gekennzeichnet, daß zwei Verbindungskanäle (16, 17) vorgesehen sind, die symmetrisch zur Längsmittelachse des Strömungskanals (3) angeordnet sind.

12. Vorrichtung nach einem der Ansprüche 1 bis 11, dadurch gekennzeichnet, daß die Verbindungskanäle (16, 17) einen im wesentlichen rechteckförmigen Querschnitt aufweisen.

13. Vorrichtung nach einem der Ansprüche 1 bis 12, dadurch gekennzeichnet, daß der Sondenkörper (1) einen trapezförmigen Querschnitt aufweist.

14. Vorrichtung nach einem der Ansprüche 1 bis 13, dadurch gekennzeichnet, daß die der Strömung zugewandte Anströmseite (10) des Sondenkörpers (1) im wesentlichen senkrecht zur Strömungsrichtung angeordnet ist.

15. Vorrichtung nach Anspruch 13 oder 14, dadurch gekennzeichnet, daß die der Strömung abgewandte Rückseite (13) des Sondenkörpers (1) kleiner als die Anströmseite (10) ist, wobei die Seitenflächen in Strömungsrichtung aufeinander zu geneigt verlaufen.

16. Vorrichtung nach einem der Ansprüche 1 bis 15, dadurch gekennzeichnet, daß die Verbindungskanäle (16, 17) in den Seitenflächen münden.

17. Vorrichtung nach einem der Ansprüche 1 bis 12, dadurch gekennzeichnet, daß der Sondenkörper einen rhombischen oder quadratischen Querschnitt aufweist.

18. Vorrichtung nach Anspruch 17, dadurch gekennzeichnet, daß der Sondenkörper derart angeordnet ist, daß zwei symmetrisch zur Längsmittelachse angeordnete, schräg verlaufende Anströmflächen (14) sowie zwei symmetrisch zur Längsmittelachse angeordnete, schräg verlaufende Rückflächen (15) gebildet sind.

19. Vorrichtung nach Anspruch 17 oder 18, dadurch gekennzeichnet, daß die Flächen (14, 15) jeweils unter 45° zur Strömungsrichtung geneigt sind.

20. Vorrichtung nach einem der Ansprüche 17 bis 19, dadurch gekennzeichnet, daß die Verbindungskanäle (16, 17) in den Rückflächen (15) münden.

21. Vorrichtung nach einem der Ansprüche 17 bis 19, dadurch gekennzeichnet, daß die Verbindungskanäle (16, 17) in den Anströmflächen (14) münden.

22. Vorrichtung nach einem der Ansprüche 1 bis 21, dadurch gekennzeichnet, daß die Referenzfaser (9) sich frei durch den Referenzkanal (8) erstreckt.

23. Vorrichtung nach einem der Ansprüche 1 bis 22, dadurch gekennzeichnet, daß der Referenzkanal (8) im wesentlichen parallel zu dem Meßkanal (6) verläuft.

24. Vorrichtung nach einem der Ansprüche 1 bis 23, dadurch gekennzeichnet, daß die Erfassungsvorrichtung eine Lichtquelle (SL), die die optische Meßfaser (6) mit einem Strahlenbündel beaufschlagt, einen Fotodetektor (PD; PD1), der das durch die Meßfaser (6) hindurchtretende Licht erfaßt, einen Verstärker (AMP), eine Frequenz-Meßvorrichtung (MMF) und eine Anzeigevorrichtung (AFF) umfaßt.

25. Vorrichtung nach Anspruch 24, dadurch gekennzeichnet, daß im Strahlengang vor der Meßfaser (6) ein Strahlenteiler (SF) angeordnet ist, der ein Teil des Lichtes zu der optischen Referenzfaser (9) ablenkt, wobei ein weiterer Fotodetektor (PD2) vorgesehen ist, der das durch die Referenzfaser (9) hindurchtretende Licht erfaßt.

26. Vorrichtung nach Anspruch 25, dadurch gekennzeichnet, daß eine Vergleichsvorrichtung (DT) vorgesehen ist, die das durch die Meßfaser (7) hindurchtretende Licht mit dem durch die Referenzfaser (9) hindurchtretenden Licht vergleicht.

## Claims

1. Apparatus for measuring the fluid flow in a flow channel (3) with a probe body (1), which is placed in said flow channel (3) symmetrically to the median longitudinal axis thereof and has at least two edges extending substantially perpendicularly to the flow direction, a measuring channel (6) substantially perpendicular to the flow direction being formed in the probe body (1) and is connected to the fluid flow by means of connecting channels (16,17), an optical measuring fibre (7) located in the measuring channel (6) and a detecting device by means of which it is possible to detect changes to the physical characteristics of the measuring fibre (7) caused by pressure fluctuations of the fluid due to turbulence, the measuring fibre (7) extending freely through the measuring channel (6), characterized in that in the probe body (1) is formed an additional reference channel (8) which is not in connection with the fluid and in which is placed an optical reference fibre (9).

2. Apparatus according to claim 1, characterized in that the probe body (1) is fixed by means of two flanges (20,21) arranged outside the flow channel (3).

3. Apparatus according to claim 2, characterized in that each flange (20,21) has a port (20,23), which is aligned with the measuring channel (6), the optical measuring fibre (7) passing through the ports (20,22).

4. Apparatus according to claim 3, characterized in that at the point where the optical measuring fibre (7) penetrates the flanges (20,21) a sealing element (22,23) is provided in each case.

5. Apparatus according to one of the claims 1 to 4, characterized in that the probe body (1) extends over the entire height of the flow channel (3).

6. Apparatus according to one of the claims 1 to 5, characterized in that the edges are substantially parallel to the measuring channel (6).

7. Apparatus according to one of the claims 1 to 6, characterized in that the measuring channel (6) has a central area (26) with a larger diameter.

8. Apparatus according to one of the claims 1 to 7, characterized in that the measuring channel (6) extends over the entire height of the probe body (1).

9. Apparatus according to one of the claims 1 to 8, characterized in that the measuring channel (6) has a cylindrical cross-section.

10. Apparatus according to one of the claims 1 to 9, characterized in that the connecting channels (16,17) are substantially perpendicular to the flow direction and perpendicular to the measuring channel (6).

11. Apparatus according to one of the claims 1 to 10, characterized in that there are two connecting channels (16,17) arranged symmetrically to the median longitudinal axis of the flow channel (3).

12. Apparatus according to one of the claims 1 to 11, characterized in that the connecting channels (16,17) have a substantially rectangular cross-section.

13. Apparatus according to one of the claims 1 to 12, characterized in that the probe body (1) has a trapezoidal cross-section.

14. Apparatus according to one of the claims 1 to 13, characterized in that the incident flow side (10) of the probe body (1) facing the flow is substantially perpendicular to the flow direction.

15. Apparatus according to claim 13 or 14, characterized in that the rear (13) of the probe body (1) remote from the flow is smaller than the incident flow side (10), the lateral faces being inclined towards one another in the flow direction.

16. Apparatus according to one of the claims 1 to 15, characterized in that the connecting channels (16,17) issue into the lateral faces.

17. Apparatus according to one of the claims 1 to 12, characterized in that the probe body has an orthorhombic or square cross-section.

18. Apparatus according to claim 17, characterized in that the probe body is positioned in such a way that two inclined incident flow faces (14) arranged symmetrically to the median longitudinal axis and two inclined back faces (15) arranged symmetrically to the median longitudinal axis are formed.

19. Apparatus according to claim 17 or 18, characterized in that the faces (14,15) are in each case inclined by 45° to the flow direction.

20. Apparatus according to one of the claims 17 to 19, characterized in that the connecting channels (16,17) issue into the back faces (15).

21. Apparatus according to one of the claims 17 to 19, characterized in that the connecting channels (16,17) issue into the incident flow faces (14).

22. Apparatus according to one of the claims 1 to 21, characterized in that the reference fibre (9) extends freely through the reference channel (8).

23. Apparatus according to one of the claims 1 to 22, characterized in that the reference channel (8) extends substantially parallel to the measuring channel (6).

24. Apparatus according to one of the claims 1 to 23, characterized in that the detecting device comprises a light source (SL) applying a beam bundle to the optical measuring fibre (6), a photodetector (PD,PD1), which detects the light passing through the measuring fibre (6), an amplifier (AMP), a frequency measuring device (MMF) and an indicating or display device (AFF).

25. Apparatus according to claim 24, characterized in that in the optical path upstream of the measuring fibre (6) is positioned a beam splitter (SF), which deflects part of the light to the optical reference fibre (9), a further photodetector (PD2) being provided, which detects the light passing through the reference fibre (9).

26. Apparatus according to claim 25, characterized in that a comparator (DT) is provided, which compares the light passing through the measuring fibre (7) with the light passing through the reference fibre (9).

## Revendications

1. Dispositif pour la mesure du débit d'un fluide dans un canal d'écoulement (3), comprenant :
. un corps de sonde (1), placé dans le canal d'écoulement symétriquement par rapport à l'axe central longitudinal de celui-ci et présentant au moins deux côtés s'étendant essentiellement verticale par rapport à la direction d'écoulement, un canal de mesure (6), s'étendant essentiellement vertical par rapport à la direction d'écoulement et relié à l'écoulement du fluide au moyen de canaux de liaison (16,17), étant conformé dans le corps de sonde (1),
. une fibre optique de mesure (7), placée dans le canal de mesure (6), et
. un dispositif de détection permettant la détection des modifications des caractéristiques physiques de la fibre optique (7) dues aux fluctuations de pression engendrées par des tourbillons,
la fibre optique traversant librement le canal de mesure (6), caractérisé en ce qu'un canal de référence (8) supplémentaire, non en communication avec le fluide, est conformé dans le corps de sonde (1), canal dans lequel est placée une fibre optique de référence (9).

2. Dispositif selon la revendication 1, caractérisé en ce que le corps de sonde (1) est fixé au moyen de deux brides (20,21) disposées à l'extérieur du canal d'écoulement (3).

3. Dispositif selon la revendication 2, caractérisé en ce que chaque bride (20,21) présente une ouverture de passage (22,23), dans l'alignement du canal de mesure (6), la fibre optique de mesure (7) passant par les ouvertures (22,23).

4. Dispositif selon la revendication 3, caractérisé en ce qu'un élément d'étanchéité (22,23) est prévu à chaque point de passage de la fibre de mesure optique (7) à travers la bride (20,21).

5. Dispositif selon l'une quelconque des revendications 1 à 4, caractérisé en ce que le corps de sonde (1) s'étend sur la hauteur totale du canal d'écoulement (3).

6. Dispositif selon l'une quelconque des revendications 1 à 5, caractérisé en ce que les faces s'étendent essentiellement parallèles au canal de mesure (6).

7. Dispositif selon l'une quelconque des revendications 1 à 6, caractérisé en ce que le canal de mesure (6) présente une zone médiane (26) à diamètre plus large.

8. Dispositif selon l'une quelconque des revendications 1 à 7, caractérisé en ce que le canal de mesure (6) s'étend sur la hauteur totale du corps de sonde (1).

9. Dispositif selon l'une quelconque des revendications 1 à 8, caractérisé en ce que le canal de mesure (6) présente une section cylindrique.

10. Dispositif selon l'une quelconque des revendications 1 à 9, caractérisé en ce que les canaux de liaison (16,17) s'étendent essentiellement verticalement par rapport à la direction d'écoulement et par rapport au canal de mesure (6).

11. Dispositif selon l'une quelconque des revendications 1 à 10, caractérisé en ce que sont prévus deux canaux de liaison (16,17), disposés symétriques par rapport à l'axe médian longitudinal du canal d'écoulement (3).

12. Dispositif selon l'une quelconque des revendications 1 à 11, caractérisé en ce que les canaux de liaison (16,17) présentent une section essentiellement rectangulaire.

13. Dispositif selon l'une quelconque des revendications 1 à 12, caractérisé en ce que le corps de sonde (1) présente une section de forme trapézoïdale.

14. Dispositif selon l'une quelconque des revendications 1 à 13, caractérisé en ce que la face aval (10) tournée vers l'écoulement est disposée essentiellement verticale par rapport à la direction d'écoulement.

15. Dispositif selon l'une quelconque des revendications 13 ou 14, caractérisé en ce que la face arrière (13) du corps de sonde (1) éloignée de l'écoulement est plus petite que la face aval (10), de sorte que les faces latérales convergent l'une vers l'autre dans le sens de l'écoulement.

16. Dispositif selon l'une quelconque des revendications 1 à 15, caractérisé en ce que les canaux de liaison (16,17) débouchent dans les faces latérales.

17. Dispositif selon l'une quelconque des revendications 1 à 12, caractérisé en ce que le corps de sonde présente une section rhomboïde ou carrée.

18. Dispositif selon la revendication 17, caractérisé en ce que le corps de sonde est placé de façon à former deux faces aval (14), obliques et disposées symétriques par rapport à l'axe médian longitudinal ainsi que deux faces arrière (15) obliques et disposées symétriques par rapport à l'axe médian longitudinal.

19. Dispositif selon l'une quelconque des revendications 17 ou 18, caractérisé en ce que les faces (14,5) sont inclinées chacune selon un angle de 45° par rapport à la direction d'écoulement.

20. Dispositif selon l'une quelconque des revendications 17 à 19, caractérisé en ce que les canaux de liaison (16,17) débouchent dans les faces arrière (15).

21. Dispositif selon l'une quelconque des revendications 17 à 19, caractérisé en ce que les canaux de liaison (16,17) débouchent dans les faces aval (14).

22. Dispositif selon l'une quelconque des revendications 1 à 21, caractérisé en ce que la fibre de référence (9) traverse librement le canal de référence (8).

23. Dispositif selon l'une quelconque des revendications 1 à 22, caractérisé en ce que le canal de référence (8) est essentiellement parallèle au canal de mesure (6).

24. Dispositif selon l'une quelconque des revendications 1 à 23, caractérisé en ce que le dispositif de détection comporte une source lumineuse (SL), qui apporte un faisceau lumineux à la fibre optique de mesure (6), un photodétecteur (PD,PD1) qui détecte la lumière traversant la fibre de mesure (6), un amplificateur (AMP), un dispositif de mesure de fréquence (MMF) et un dispositif d'affichage (AFF).

25. Dispositif selon la revendication 24, caractérisé en ce qu'un dispositif séparateur des rayons (SF) est placé dans le passage des rayons devant la fibre de mesure (6), déviant une partie de la lumière vers la fibre optique de référence (9), un autre photodétecteur (PD2) étant prévu pour la détection de la lumière passant par la fibre de référence (9).

26. Dispositif selon la revendication 25, caractérisé en ce qu'est prévu un comparateur (DT) comparant la lumière passant par la fibre de mesure (7) à celle passant par la fibre de référence (9).
